# EUROPÄISCHE PATENTSCHRIFT

(11) **EP 1 368 526 B1**
(45) Veröffentlichungstag und Bekanntmachung des Hinweises auf die Patenterteilung: **25.01.2006**
(21) Anmeldenummer: 01275153.3
(22) Anmeldetag: 08.12.2001
(51) Int. Cl.: D06N 7/00, B29D 31/00, B32B 7/02, E04F 15/10

(54) **BODENBELAG**
FLOOR COVERING
REVETEMENT DE SOL

(30) Priorität: 14.03.2001 DE 10112246
(43) Veröffentlichungstag der Anmeldung: 10.12.2003
(73) Patentinhaber: Carl Freudenberg KG, 69469 Weinheim (DE)
(72) Erfinder: GRAAB, Gerhard, 68199 Mannheim (DE); HECKEL, Klaus, 69517 Gorxheimertal (DE)
(74) Vertreter: Ripper, Monika Sigrid
(86) Internationale Anmeldenummer: PCT/EP2001/014432
(87) Internationale Veröffentlichungsnummer: WO 2003/069052

(56) Entgegenhaltungen:
- EP-A- 0 105 074
- EP-A- 0 117 272
- EP-A- 0 181 426
- EP-A- 0 472 808
- US-A- 1 861 663

## Beschreibung

### Technisches Gebiet

Die Erfindung betrifft einen Bodenbelag aus zumindest zwei miteinander verbundenen Schichten, umfassend eine unter einer hellfarbigen Oberschicht aus Gummi angeordnete Unterschicht aus elektrisch leitendem Gummi, wobei die Oberschicht in musterartig über ihre Fläche verteilten Teilbereichen durchbrochen und dort durch elektrisch leitendes Gummi gebildet ist.

### Stand der Technik

Ein solcher Bodenbelag ist aus der EP 0 105 074 B1 bekannt. Er besteht aus zwei übereinander angeordneten, kontrastfarbenen Schichten aus Gummi, von denen die untere leitfähig und die obere nicht leitfähig ist. Er wird erzeugt, indem der Werkstoff der Oberschicht vor dem Verpressen durch Anvulkanisierung vorgehärtet und in den genannten Flächenbereichen entfernt und anschließend auf die aus weicherem, unvulkanisiertem Gummi bestehende Unterschicht aufgeschichtet wird. Das Verpressen wird so vorgenommen, dass der Werkstoff der Unterschicht die Flächenbereiche ganz ausfüllt und dass das so erhaltene Gebilde durch einen nachfolgenden Vulkanisationsprozess dauerhaft verbunden und in sich verfestigt wird. Es lässt sich auf diese Weise ausgezeichnet als Bodenbelag verwenden, der hinsichtlich der farbigen Gestaltung seiner Oberfläche in weitem Rahmen variierbar ist und es gestattet, auf die Oberseite auftreffende, elektrische Spannungen über die Unterseite abzuleiten. Die Herstellung eines solchen Bodenbelags ist allerdings aufwendig insofern, als das Entfernen der Oberschicht in den Teilbereichen die Anwendung eines Schneideprozesses voraussetzt. Dies ist nicht nur teuer, sondern es bedingt darüber hinaus Einschränkungen hinsichtlich der geometrischen Ausbildung und Verteilung der Teilbereiche.

Aus der DE-PS 36 23 795 ist es bekannt, einer Gummimischung eine Fraktion gehärteter Gummipartikel mit einer Partikelgröße von 0,1 bis 1 mm in einer Größenordnung von 5 bis 60 Teilen als Beimischung zu jeweils 100 Teilen vor dessen Aushärtung zuzusetzen, um eine definiert unruhige Oberfläche zu erzeugen. Diese verleiht beispielsweise einem Griff aus Gummi eine besonders gute Griffigkeit.

### Darstellung der Erfindung

Der Erfindung liegt die Aufgabe zugrunde, einen Bodenbelag der eingangs genannten Art derart weiterzuentwickeln, dass sich bei vereinfachter und billigerer Herstellbarkeit eine bessere Möglichkeit ergibt, das Aussehen der Oberfläche in geschmacklicher Hinsicht zu gestalten.

Diese Aufgabe wird erfindungsgemäß bei einem Bodenbelag der eingangs genannten Art durch die kennzeichnenden Merkmale von Anspruch 1 gelöst. Auf vorteilhafte Ausgestaltungen nehmen die Unteransprüche Bezug.

Bei dem erfindungsgemäßen Bodenbelag ist es vorgesehen, dass die Oberschicht aus einer Schüttung aus ersten Partikeln erzeugt ist, die hellfarbig sind und aus elektrisch isolierendem, unvulkanisiertem Gummi bestehen sowie aus darin eingebetteten, zweiten Partikeln, die aus elektrisch leitendem, zumindest anvulkanisiertem Gummi bestehen, dass die zweiten Partikel einen durch Siebanalyse bestimmten Durchmesser D haben, der mindestens so groß ist wie die Dicke D1 der Oberschicht und höchstens so groß wie die Summe der Dicken der Ober- und der Unterschicht D2 zusammen, dass die ersten und die zweiten Partikel untereinander mit der Unterschicht porenfrei verpresst und durch Vulkanisation verbunden sind und dass pro Oberflächeneinheit des Bodenbelags von 31,7 cm² mindestens ein oder zwei Partikel vorliegt mit der Maßgabe, dass maximal 50% der Gesamtfläche des Bodenbelags durch die Fläche der zweiten Partikel eingenommen sind. Die ersten und die zweiten Partikel bestehen somit aus unterschiedlichen Gummimischungen, die zusätzlich in einem von einander abweichenden Vulkanisationszustand vorliegen. Zusätzlich können die ersten Partikel einen deutlich geringeren Durchmesser als die zweiten Partikel haben, zweckmäßig einen Durchmesser, der 0,05 bis 0,6-mal so groß ist wie derjenige der zweiten Partikel, wodurch sich beim Aufbringen der Oberschicht auf die Unterschicht eine verhältnismäßig dichte Lage der ersten Partikel ergibt. Die geometrische Ausbildung des fertigen Bodenbelages lässt sich hierdurch besonders gut vorherbestimmen.

Die zweiten Partikel können in dieser Lage regelmäßig oder unregelmäßig verteilt sein, beispielsweise in einem völlig regelmäßig oder in einem statistisch verteilten Muster. Sie können darüber hinaus von völlig regelmäßiger Gestalt sein; jedoch auch von unregelmäßiger Gestalt, wie beispielsweise im Zuge eines Mahlprozesses erhältlich. In jedem Falle haben die zweiten Partikel, verglichen mit den ersten Partikeln, einen wesentlich größeren Durchmesser, wodurch sie nach dem Aufbringen der Oberschicht auf die Unterschicht erhaben über die Oberfläche des so erhaltenen Gebildes vorstehen.

Die Unterschicht des Bodenbelags besteht aus einer kontinuierlich durchgehenden Schicht aus un- bzw. anvulkanisiertem Gummi. Sie ist durch einen hinreichend hohen Gehalt eines elektrisch leitfähigen Füllstoffes elektrisch leitfähig, beispielsweise durch einen Gehalt von 5 bis 25% eines hochaktiven Rußes oder Graphits oder eines metallischen Pulvers. Eine damit übereinstimmende Zusammensetzung können auch die zweiten Partikel haben, die in der Oberschicht enthalten sind.

Zur Herstellung des gebrauchsfertigen Bodenbelags wird auf die Unterschicht die Oberschicht in Form einer Schüttung aus ersten Partikeln aufgebracht, die hellfarbig sind und aus elektrisch isolierendem, unvulkanisierendem Gummi bestehen sowie aus darin eingebetteten, zweiten Partikeln, die aus elektrisch leitendem, zumindest anvulkanisiertem Gummi bestehen, wobei die zweiten Partikel eine durch Siebanalyse bestimmten Durchmesser D haben, der mindestens so groß ist wie die Dicke D1, der Oberschicht und höchstens so groß wie die Summe D2 der Dicke der Ober- und der Unterschicht des fertigen Bodenbelags und wobei die Menge der zweiten Partikel so bemessen wird, dass pro Oberflächeneinheit von 31,7 cm² des fertigen Bodenbelags mindestens einer der zweiten Partikel vorliegt mit der Maßgabe, dass maximal 50% Gesamtfläche durch die Fläche der zweiten Partikel eingenommen ist und dass die ersten und die zweiten Partikel untereinander und mit der Unterschicht porenfrei verpresst und durch Vulkanisation verbunden werden. Wegen der elastischen Verformbarkeit der zweiten Partikel kann deren Durchmesser D auch geringfügig größer sein als die Summe der Dicken D1 und D2 der Ober- und Unterschicht, ohne dass die Lehre der Erfindung verlassen wird. Wertüberschreitungen bis zu 10% sind im allgemeinen zulässig.

Die Vulkanisation bedingt eine vorübergehende Verflüssigung der zur Herstellung des Bodenbelags verwendeten Unterschicht der ersten Partikel. Diese Verflüssigung schreitet, ausgehend von den beiderseitigen Oberflächen, Ober welche die zur Vulkanisation erforderliche Wärme eingeleitet wird, parallel zur Dauer der Erwärmung kontinuierlich in Richtung der Kemzone fort, wodurch sich im Anschluß an eine Fixierung der Oberflächen des Gebildes eine zunehmende Verlagerung der Fixierungszone in Richtung der Kemzone des Bodenbelags ergibt. Hierdurch wird verhindert, dass die elektrisch leitenden, zweiten Partikel während des Herstellungsprozesses durch das nachfolgend erweichende, elektrisch isolierende Gummi der ersten Partikel oberseitig überdeckt werden können mit der Folge, dass auf die Oberfläche der gebrauchsfertigen Bodenbelags auftreffende elektrische Ladungen nicht mehr in Richtung der Unterschicht abgeleitet werden könnten.

In dem gebrauchsfertigen Bodenbelag sind die Komgrenzen der die Oberschicht maßgeblich bildenden und porenfrei miteinander verpressten ersten Partikel als Netzstruktur erkennbar, in die die zweiten Partikel eingebettet sind. In geschmacklicher Hinsicht ist dies nicht weiter störend.

Bei einer Ausführung des Bodenbelages, bei der die zweiten Partikel aus bereits fertig ausvulkanisiertem Gummi erzeugt sind, ist darüber hinaus zu beobachten, dass die Partikel im Anschluß an die Entnahme aus der Vulkanisationspresse eine stärkere Rückfederung haben, bezogen auf die sie umgebenden, aus unvulkanisierten, ersten Partikeln erzeugten Zonen. Dies hat zur Folge, dass sich die zweiten Partikel im gebrauchsfertigen Bodenbelag geringfügig über dessen Oberfläche erheben, was erfindungsgemäß dazu benutzt wird, auf die Oberfläche des Bodenbelages auftreffende, elektrische Ladungen und elektrische Spannungen in besonders günstiger Weise in die Unterschicht des Bodenbelages abzuleiten. In Bezug auf eine Verwendung in explosionsgefährdeten Räumen ist dies von ganz besonderem Vorteil.

In Hinblick auf eine besonders kostengünstige Herstellung des Bodenbelages hat es sich als vorteilhaft bewährt, wenn der Werkstoff der zweiten Partikel und der Werkstoff der Unterschicht identisch sind. Es ist somit nicht unbedingt erforderlich, für die zweiten Partikel und die Unterschicht voneinander abweichende Werkstoffe zu verwenden.

Die ersten und die zweiten Partikel können grundsätzlich übereinstimmend eingefärbt sein. Eine Kontrolle der elektrischen Ableitfähigkeit von der Oberseite ist bei einer solchen Ausbildung allerdings recht schwierig. Im Rahmen der vorliegenden Erfindung wird daher eine Ausführung bevorzugt, bei der die ersten und die zweiten Partikel kontrastfarben sind. Die Kontrolle der elektrischen Ableitfähigkeit kann dann sogar durch Augenschein mit hinreichender Sicherheit erfolgen.

Die ersten Partikel können Insgesamt von einer übereinstimmenden Einfärbung sein. Auch dies ist im Rahmen der Erfindung jedoch als nicht zwingende Vorschrift zu betrachten. Die Partikel können somit auch solche umfassen, die voneinander abweichend eingefärbt oder gegebenenfalls kontrastfarben sind. Das Erscheinungsbild lässt sich hierdurch an besondere Erfordernisse anpassen.

Der erfindungsgemäße Bodenbelag lässt sich bei einer glatt ausgebildeten Oberfläche besonders einfach reinigen. Dem steht nicht entgegen, dass die Nutzfläche zur Verbesserung des Aussehens und/oder der Rutschsicherheit gegebenenfalls auch leicht gewellt oder gepunzt sein kann. Dazu ist es lediglich erforderlich, in der zur gegenseitigen Verpressung und Erwärmung verwendeten Einrichtung, beispielsweise am Doppelband - oder Etagenpresse entsprechend gestaltete Mitläufer oder Presswerkzeuge zu verwenden.

### Kurzbeschreibung der Zeichnungen

Es zeigen:

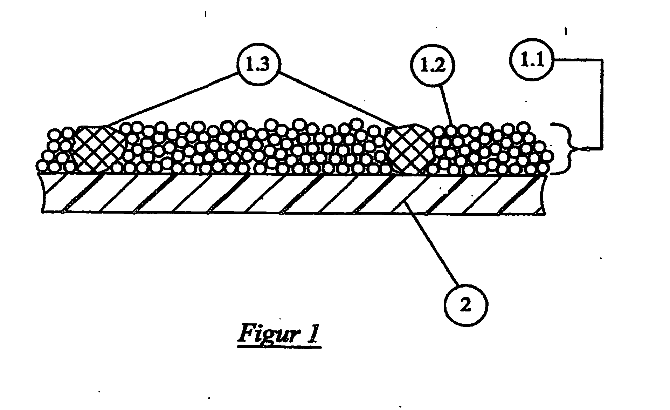

- Fig.1:: Eine Unterschicht des Bodenbelages in längsgeschnittener Darstellung, auf die eine Oberschicht in Form einer Schüttung aus ersten und zweiten Partikeln lose aufgebracht ist;
- Fig. 2:: einen Ausschnitt aus einem gebrauchsfertigen Bodenbelag in längsgeschnittener Darstellung;

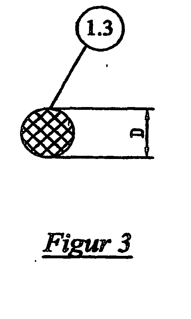

- Fig. 3:: ein Muster der zweiten Partikel zur Bestimmung des Durchmessers.

### Ausführung der Erfindung

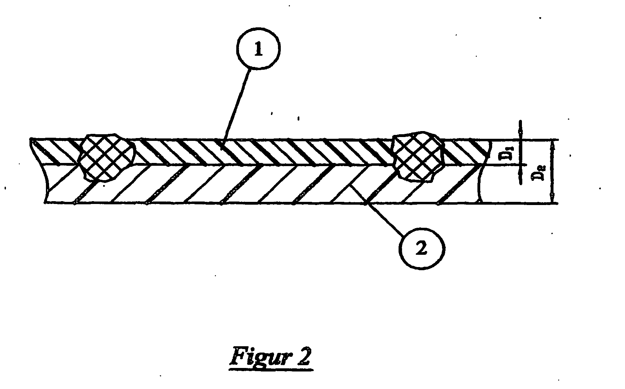

Der in Fig. 2 gezeigte Bodenbelag ist zweischichtig ausgebildet. Dies steht einer Erfindung nicht entgegen, bei der die Oberschicht 1 und die Unterschicht 2 mit einer darunter angeordneten Tragschicht verbunden sind, die ihrerseits ebenfalls aus einem polymeren oder natürlichen Werkstoff bestehen kann.

Zur Herstellung des Bodenbelages ist es zunächst vorgesehen, in einem ersten Schritt die Unterschicht aus elektrisch leitfähigem Werkstoff zu erzeugen. Dazu wird eine Gummimischung in der nachfolgenden Zusammensetzung in einen Mischer eingegeben und homogen vermischt:

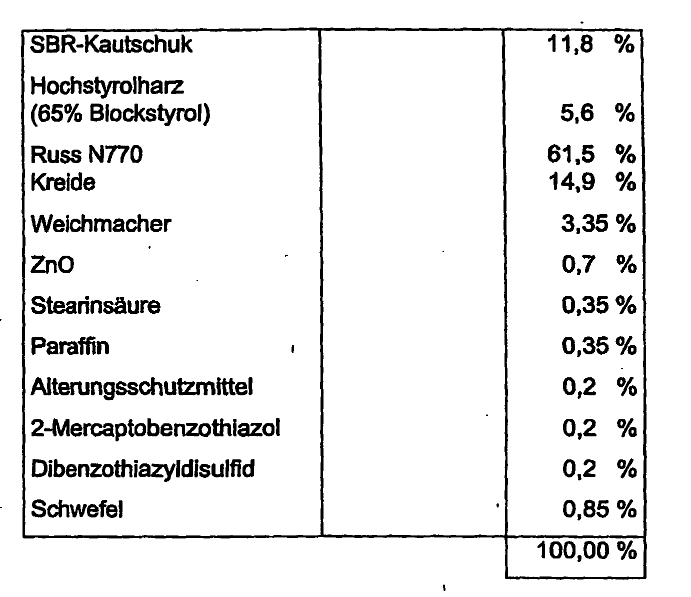

Die prozentualen Angaben beziehen sich jeweils auf das Gesamtgewicht der Mischung.

Die Mischung wird nach ihrer Homogenisierung zum Beispiel auf einen Kalander gegeben und in die Gestalt einer unvulkanisierten Folie einer Dicke von 1 mm überführt. Diese bildet die Unterschicht des fertigen Bodenbelages.

Auf die Unterschicht wird anschließend mit einer Dosiereinheit ein Streuteppich aus unvulkanisierten, bunten und elektrisch nicht leitfähigen Elastomerpartikeln in der folgenden Zusammensetzung in Form einer Schüttung aufgebracht. Zur Herstellung wird eine Gummimischung verwendet, die die folgende Zusammensetzung hat:

| | | |
|---|---|---|
| Styrol-Butadien-Kautschuk mit 23 Gew.-% Styrolgehalt | | 100 Teile |
| Styrol-Butadien-Copolymer mit 85 Gew.-% Styrolgehalt | | 20 Teile |
| gefällter Kieselsäure | | 40 Teile |
| Kaolin | | 70 Teile |
| gefällter Kreide | | 30 Teile |
| Cumaron-Inden-Harz | | 15 Teile |
| Zinkoxid | | 5 Teile |
| Stearinsäure | | 1,5 Teile |
| Schwefelsäure | | 2,5 Teile |
| Polyethylenglycol | | 3 Teile |
| Cyclohexylbenzthiazylsulfenamid | | 2,7 Teile |
| Zinkdibenzyldithiocarbamat | | 0,7 Teile |
| Pigmente | | nach Wahl |

Die vorgenannte Zusammensetzung wird in einen Innenmischer eingegeben und homogen vermischt. Im Anschluß daran wird die Mischung in einen Schneckenextruder überführt, der bei einer Temperatur von 60 bis 100°C betrieben wird und die Mischung zur Erzeugung von Strängen durch eine Lochscheibe mit Bohrungen von 3 bis 5 mm Durchmesser extrudiert. Alle 1 bis 2 mm werden die aus der Lochscheibe austretenden Stränge abgeschlagen. Alternativ hierzu kann man die plastifizierte Masse auch aus einer Schlitzdüse eines Schlauchspritzkopfes austreten lassen und das so erhaltene Gebilde nach seiner Abkühlung mit Hilfe einer Schneidmühle granulieren.

Die Korngrößenverteitung der Granulate beträgt

| | | |
|---|---|---|
| >2,5 mm | | 1 % |
| >2,0 mm | | 33 % |
| >1,4 mm | | 55 % |
| >1,0 mm | | 25 % |
| >0,71 mm | | 6 % |

Um verschieden farbige Granulate zu erhalten, können die Pigmente nach Wahl zur Erzielung bestimmter Farben eingesetzt werden.

Von den so erhaltenen Partikeln werden mit Hilfe der Siebanalyse diejenigen abgetrennt, die einen Durchmesser von 0,2 bis 0,8 mm haben, gegebenenfalls mit andersfarbigen Partikel vermischt und in einer Menge auf die Unterschicht 2 aufgebracht, die so bemessen ist, dass die Gesamtdicke des Belags, bestehend aus der schwarzen Unterschicht und der bunten Dekorschicht, 1,8 mm beträgt.

In einer zweiten, nachgeschalteten Streueinheit werden zerkleinerte, durch Ruß oder Graphit elektrisch leitende Partikel mit einer Zusammensetzung, die derjenigen der Unterschicht entspricht, die aber durch eine vorausgegangene Vulkanisation bereits ausgehärtet sind, auf die Oberschicht aufgestreut in einer Menge, die sicherstellt, dass bei statistischer Verteilung dieser leitfähigen Partikel pro Flächeneinheit von 31,7 cm² jeweils mindestens eins bis zwei Partikel zur Ablage gelangen. Die zweiten Partikel haben einen Durchmesser, der ebenfalls durch Siebanalyse bestimmt wird und 0,7 bis 0,9 mm aufweist.

Das so erhaltene Gebilde, bestehend aus der unvulkanisierten Unterschicht und einer schichtweise darauf aufgebrachten Schüttung aus unvulkanisierten ersten Partikeln und darin statistisch verteilten, vulkanisierten und elektrisch leitfähigen zweiten Partikeln wird dann in eine Doppelbandpresse überführt, porenfrei verpresst und vulkanisiert. Dabei werden die nicht plastisch verformbaren, elektrisch leitfähigen, zweiten Partikel durch den zunächst losen Streuteppich aus nicht leitfähigen, ersten Partikeln durchgepresst, wobei sie, bedingt durch ihren die Dicke der Oberschicht D1 übersteigenden Durchmesser D in Kontakt mit der Unterschicht gelangen. Auf die Oberseite des gebrauchsfertigen Bodenbelages auftreffende, elektrische Spannungen können dadurch bedingt von der Oberseite durch die zweiten Partikel hindurch in Richtung der Unterschicht abgeleitet werden. Die diesbezügliche Wirkung tritt besonders zuverlässig ein insofern, als die zweiten Partikel eine gewisse Rückfederung haben, was dazu führt, dass sie nach dem Verlassen der Doppelbandpresse senkrecht zur Ebene des Bodenbelages zurückfedern und die Oberfläche der Oberseite geringfügig überragen können. Auch von nicht ganz eben ausgebildeten Objekten, beispielsweise der Unterseite von Schuhsohlen, können dadurch elektrische Ladungen zuverlässig in die Unterschicht abgeleitet werden.

Der gebrauchsfertige Bodenbelag wirkt auf Grund seiner Konstruktion bunt. Seine Musterung zeigt keine nennenswerte Richtungsorientierung, in der die aus schwarzem Werkstoff bestehenden, zweiten Partikel nicht störend in Erscheinung treten.

Bei dem vorstehenden Beispiel sind sowohl die ersten als auch die zweiten Partikel von geometrisch unregelmäßiger Gestalt und statistisch verteilt angeordnet. Dies kommt modernen, geschmacklichen Anforderungswünschen entgegen, schließt aber nicht aus, gegebenenfalls zweite Partikel zu verwenden, die untereinander identisch ausgebildet, vollkommen gleichmäßig oder auch nach einem willkürlich vorgeschriebenen Muster in der Oberschicht verteilt sind. Mischformen, die regelmäßig und unregelmäßig ausgebildete zweite Partikel enthalten, können ebenfalls zur Anwendung gelangen.

Die Herstellung des erfindungsgemäßen Bodenbelages ist sehr kostengünstig möglich. Dennoch bietet sie eine ausgezeichnete Möglichkeit, Modifizierungen des äußeren Erscheinungsbildes vorzunehmen und die elektrische Ableitfähigkeiten auf die jeweils vorgeschriebenen Werte einzustellen.

## Patentansprüche

1. Bodenbelag aus zumindest zwei miteinander verbundenen Schichten, umfassend eine unter einer hellfarbigen Oberschicht (1) aus Gummi angeordnete Unterschicht (2) aus elektrisch leitendem Gummi, wobei die Oberschicht (1) in musterartig über ihre Fläche verteilten Teilbereichen durchbrochen und nur dort durch elektrisch leitendes Gummi gebildet ist, **dadurch gekennzeichnet, dass** die Oberschicht (1) aus einer Schüttung (1.1) aus ersten Partikeln (1.2) erzeugt ist, die hellfarbig sind und aus elektrisch isolierendem Gummi bestehen sowie aus darin eingebetteten, zweiten Partikeln (1.3), die aus elektrisch leitendem, zumindest anvulkanisiertem Gummi bestehen, dass die zweiten Partikel (1.3) einen durch Siebanalyse bestimmten Durchmesser D haben, der mindestens so groß ist wie die Dicke D1 der Oberschicht und höchstens so groß wie die Summe der Dicken der Ober- und der Unterschicht D2, dass die ersten (1.2) und die zweiten Partikel (1.3) untereinander und mit der Unterschicht (2) porenfrei verpresst und durch Vulkanisation verbunden sind und dass pro Oberflächeneinheit des Bodenbelags von 31,7 cm² mindestens einer der zweiten Partikel (1.3) vorliegt mit der Maßgabe, dass maximal 50 % der Gesamtfläche des Bodenbelags durch die Fläche der zweiten Partikel (1.3) eingenommen sind.

2. Bodenbelag nach Anspruch 1, **dadurch gekennzeichnet, dass** die ersten Partikel (1.2) einen deutlich geringeren Durchmesser als die zweiten Partikel haben.

3. Bodenbelag nach Anspruch 2, **dadurch gekennzeichnet, dass** die ersten Partikel (1.2) einen Durchmesser haben, der 0,05 bis 0,6-mal so groß ist wie derjenige der zweiten Partikel (1.3).

4. Bodenbelag nach einem der Ansprüche 1 bis 3, **dadurch gekennzeichnet, dass** der Werkstoff der zweiten Partikel (1.3) und der Werkstoff der Unterschicht (2) identisch sind.

5. Bodenbelag nach einem der Ansprüche 1 bis 4, **dadurch gekennzeichnet, dass** die zweiten Partikel(1.3), bezogen auf die ersten Partikel (1.2), kontrastfarben sind.

6. Bodenbelag nach einem der Ansprüche 1 bis 5, **dadurch gekennzeichnet, dass** die ersten Partikel (1.2) solche umfassen, die von einander abweichend eingefärbt sind.

7. Bodenbelag nach einem der Ansprüche 1 bis 6, **dadurch gekennzeichnet, dass** die Nutzfläche leicht gewellt oder gepunzt ist.

8. Bodenbelag nach einem der Ansprüche 1 bis 7, **dadurch gekennzeichnet, dass** die ersten Partikel (1.2) kleiner sind als die zweiten Partikel (1.3).

9. Verfahren zur Herstellung eines Bodenbelages nach einem der Ansprüche 1 bis 8, bei dem auf eine kontinuierlich ausgebildete Unterschicht (2) aus elektrisch leitendem Gummi eine Oberschicht (1) mit musterartig über der Oberfläche verteilten Durchbrechungen aufgebracht wird, die mit elektrisch leitendem Gummi gefüllt sind und bei dem die Schichten (1,2) und das in den Durchbrechungen enthaltene Gummi parallel zu einem Vulkanisationsprozess verbunden werden, **dadurch gekennzeichnet, dass** auf die Unterschicht (1) die Oberschicht (2) in Form einer Schüttung aus ersten Partikeln (1.2) aufgebracht wird, die hellfarbig sind und aus elektrisch isolierendem, unvulkanisiertem Gummi bestehen, sowie aus in die Schüttung eingebetteten, zweiten Partikeln (1.3), die aus elektrisch leitendem, zumindest anvulkanisiertem Gummi bestehen, wobei die zweiten Partikel (1.3) einen durch Siebanalyse bestimmten Durchmesser D haben, der mindestens so groß ist wie die Dicke D1 der Oberschicht (1) und zweckmäßigerweise nicht größer ist als die Summe D2 der Dicken der Ober- und der Unterschicht (1,2) des fertigen Bodenbelags und wobei die Menge der zweiten Partikel (1.3) so bemessen wird, dass pro Oberflächeneinheit von 31,7 cm² des fertigen Bodenbelages mindestens einer der zweiten Partikel (1.3) vorliegt mit der Maßgabe, dass maximal 50 % der Gesamtfläche durch die Fläche der zweiten Partikel (1.3) eingenommen ist und dass die ersten und die zweiten Partikel (1.2, 1.3) untereinander und mit der Unterschicht (2) porenfrei verpresst und durch die Vulkanisation verbunden werden.

10. Verfahren nach Anspruch 9, **dadurch gekennzeichnet, dass** die Schüttung auf eine Unterschicht (2) aus un- oder anvulkanisiertem Gummi aufgebracht wird und dass die Vulkanisation des in der Unterschicht (2) enthaltenen Gummis gleichzeitig mit der Vulkanisation des in der Oberschicht (1) enthaltenen Gummis bewirkt wird.

## Claims

1. Floor covering made up of at least two layers bonded to one another, comprising a lower layer (2) of electrically conductive rubber arranged under a light-coloured upper layer (1) of rubber, the upper layer (1) being interrupted in zones distributed over its area in a pattern and formed by electrically conductive rubber only in those zones,
**characterized in that** the upper layer (1) is produced from a bed (1.1) of first particles (1.2) that are light in colour and consist of electrically insulating rubber, as well as second particles (1.3) embedded therein, which consist of electrically conductive, at least partially vulcanized rubber, **in that** the second particles (1.3) have a diameter D, determined by screen analysis, that is at least as great as the thickness D1 of the upper layer and at most as great as the total of the thicknesses of the upper layer and the lower layer D2, **in that** the first particles (1.2) and the second particles (1.3) are pressed against one another and the lower layer (2), without pores, and bonded by vulcanization and **in that** at least one of the second particles (1.3) is present per area unit of the floor covering of 31.7 cm², with the proviso that a maximum of 50% of the total area of the floor covering is taken up by the area of the second particles (1.3).

2. Floor covering according to Claim 1, **characterized in that** the first particles (1.2) have a clearly smaller diameter than the second particles.

3. Floor covering according to Claim 2, **characterized in that** the first particles (1.2) have a diameter that is 0.05 to 0.6 times as large as that of the second particles (1.3).

4. Floor covering according to one of Claims 1 to 3,
**characterized in that** the material of the second particles (1.3) and the material of the lower layer (2) are identical.

5. Floor covering according to one of Claims 1 to 4,
**characterized in that** the second particles (1.3) are contrast-coloured relative to the first particles (1.2).

6. Floor covering according to one of Claims 1 to 5,
**characterized in that** the first particles (1.2) comprise particles that are coloured differently from one another.

7. Floor covering according to one of Claims 1 to 6,
**characterized in that** the usage surface is slightly corrugated or chased.

8. Floor covering according to one of Claims 1 to 7,
**characterized in that** the first particles (1.2) are smaller than the second particles (1.3).

9. Method for producing a floor covering according to one of Claims 1 to 8, in which an upper layer (1) with interruptions distributed in a pattern over its surface is applied to a continuously formed lower layer (2) of electrically conductive rubber, the interruptions being filled with electrically conductive rubber, and in which the layers (1, 2) and the rubber contained in the interruptions are bonded parallel to a vulcanization process,
**characterized in that** the upper layer (2) is applied to the lower layer (1) in the form of a bed of first particles (1.2) that are light in colour and consist of electrically insulating, non-vulcanized rubber, as well as second particles (1.3) embedded in the bed, which consist of electrically conductive, at least partially vulcanized rubber, the second particles (1.3) having a diameter D, determined by screen analysis, that is at least as large as the thickness D1 of the upper layer (1) and expediently not greater than the total D2 of the thicknesses of the upper and lower layers (1, 2) of the finished floor covering, and the amount of the second particles (1.3) being apportioned in such a way that at least one of the second particles (1.3) is present per area unit of 31.7 cm² of the finished floor covering, with the proviso that a maximum of 50% of the total area is taken up by the area of the second particles (1.3), and that the first and second particles (1.2, 1.3) are pressed against one another and the lower layer (2), without pores, and bonded by the vulcanization.

10. Method according to Claim 9, **characterized in that** the bed is applied to a lower layer (2) of non-vulcanized or partially vulcanized rubber and **in that** the vulcanization of the rubber contained in the lower layer (2) is brought about at the same time as the vulcanization of the rubber contained in the upper layer (1).

## Revendications

1. Revêtement de sol constitué d'au moins deux couches connectées l'une à l'autre, comprenant une couche inférieure (2) en caoutchouc électriquement conducteur disposée sous une couche supérieure (1) de couleur claire en caoutchouc, la couche supérieure (1) étant traversée dans des zones partielles réparties suivant un motif sur sa surface et étant seulement formée à ces endroits par du caoutchouc électriquement conducteur, **caractérisé en ce que** la couche supérieure (1) est produite à partir de matière en vrac (1.1) constituée de premières particules (1.2), qui sont de couleur claire et qui se composent de caoutchouc électriquement isolant ainsi que de deuxièmes particules incorporées (1.3), qui se composent de caoutchouc électriquement conducteur au moins appliqué par vulcanisation, **en ce que** les deuxièmes particules (1.3) ont un diamètre D déterminé par analyse par tamisage, qui est au moins aussi grand que l'épaisseur D1 de la couche supérieure et au plus aussi grand que la somme des épaisseurs de la couche inférieure et de la couche supérieure D2, **en ce que** les premières (1.2) et les deuxièmes particules (1.3) sont pressées les unes avec les autres et avec la couche inférieure (2) sans pores et sont liées par vulcanisation et **en ce que**, par unité de surface du revêtement de sol de 31,7 cm², au moins l'une des deuxièmes particules (1.3) est présente, à la condition qu'au maximum 50% de la surface totale du revêtement de sol soient occupés par la surface des deuxièmes particules (1.3).

2. Revêtement de sol selon la revendication 1,
**caractérisé en ce que** les premières particules (1.2) ont un diamètre nettement plus petit que les deuxièmes particules.

3. Revêtement de sol selon la revendication 2,
**caractérisé en ce que** les premières particules (1.2) ont un diamètre qui est de 0,05 à 0,6 fois le diamètre des deuxièmes particules (1.3).

4. Revêtement de sol selon l'une quelconque des revendications 1 à 3, **caractérisé en ce que** le matériau des deuxièmes particules (1.3) et le matériau de la couche inférieure (2) sont identiques.

5. Revêtement de sol selon l'une quelconque des revendications 1 à 4, **caractérisé en ce que** les deuxièmes particules (1.3) ont des couleurs qui contrastent avec les premières particules (1.2).

6. Revêtement de sol selon l'une quelconque des revendications 1 à 5, **caractérisé en ce que** les premières particules (1.2) comprennent des particules qui sont teintées de manière différente les unes des autres.

7. Revêtement de sol selon l'une quelconque des revendications 1 à 6, **caractérisé en ce que** la surface utile est légèrement ondulée ou marquée.

8. Revêtement de sol selon l'une quelconque des revendications 1 à 7, **caractérisé en ce que** les premières particules (1.2) sont plus petites que les deuxièmes particules (1.3).

9. Procédé de fabrication d'un revêtement de sol selon l'une quelconque des revendications 1 à 8, dans lequel on applique, sur une couche inférieure (2) réalisée sous forme continue, en caoutchouc électriquement conducteur, une couche supérieure (1) présentant des traversées réparties suivant un motif sur sa surface, lesquelles sont remplies de caoutchouc électriquement conducteur, et dans lequel les couches (1, 2) et le caoutchouc contenu dans les traversées sont liés parallèlement à un processus de vulcanisation, **caractérisé en ce que** l'on applique sur la couche inférieure (1) la couche supérieure (2) en forme de matière en vrac constituée de premières particules (1.2), qui sont de couleur claire et qui se composent de caoutchouc non vulcanisé électriquement isolant, ainsi que de deuxièmes particules (1.3) noyées dans la matière en vrac, qui se composent de caoutchouc au moins appliqué par vulcanisation, électriquement conducteur, les deuxièmes particules (1.3) ayant un diamètre D déterminé par analyse par tamisage, qui est au moins aussi grand que l'epaisseur D1 de la couche supérieure (1) et de manière appropriée n'est pas plus grand que la somme D2 des épaisseurs de la couche inférieure et de la couche supérieure (1, 2) du revêtement de sol fini, et la quantité des deuxièmes particules (1.3) étant dimensionnée de telle sorte que par unité de surface de 31,7 cm² du revêtement de sol fini, au moins l'une des deuxièmes particules (1.3) soit presente, à la condition qu'au maximum 50% de la sol fini totale soient occupés par la surface des deuxièmes particules (1.3) et **en ce que** les premières et deuxièmes particules (1.2, 1.3) sont pressées les unes à les autres et avec la couche inférieure (2) sans pores et sont liées par vulcanisation.

10. Procédé selon la revendication 9, **caractérisé en ce que** la matière en vrac est appliquée sur une couche inférieure (2) en caoutchouc non vulcanisé ou appliqué par vulcanisation, et **en ce que** la vulcanisation du caoutchouc contenu dans la couche inférieure (2) est effectuée simultanément à la vulcanisation du caoutchouc contenu dans la couche supérieure (1).
